# EUROPÄISCHE PATENTSCHRIFT

(11) **EP 2 366 917 B1**
(45) Veröffentlichungstag und Bekanntmachung des Hinweises auf die Patenterteilung: **13.03.2013**
(21) Anmeldenummer: 10002898.4
(22) Anmeldetag: 18.03.2010
(51) Int. Cl.: F16G 13/04

(54) **Zahnkette mit optimierten Zahnlaschen**
Sprocket chain with optimised tooth links
Chaîne dentaire dotée de chaînes articulées optimisées

(43) Veröffentlichungstag der Anmeldung: 21.09.2011
(73) Patentinhaber: iwis motorsysteme GmbH & Co. KG, 81369 München (DE)
(72) Erfinder: Belmer, Stefan, 85646 Anzing (DE); Volker, Hirschmann, Dr, 82256 Fürstenfeldbruck (DE)
(74) Vertreter: Grünecker, Kinkeldey, Stockmair & Schwanhäusser

(56) Entgegenhaltungen:
- WO-A1-2007/038911
- DE-A1- 10 209 704
- DE-A1-102004 001 279
- US-A- 4 463 550
- US-A- 4 906 224

## Beschreibung

Die Erfindung betrifft eine Zahnkette mit abwechselnd aufeinander folgenden Innenkettengliedern und Außenkettengliedern, wobei die Außenkettenglieder mindestens zwei Außenlaschen, mindestens eine Mittellasche und zwei Bolzen umfassen, die Innenkettenglieder mindestens zwei als Zahnlaschen geformte Innenlaschen umfassen, und die mindestens eine Mittellasche zwischen den Innenlaschen positioniert ist.

Derartige Zahnketten werden beispielsweise für den Steuertrieb von Verbrennungsmotoren eingesetzt. Die Zahnkette dient dabei als Antrieb für die Nockenwelle und sorgt für eine Übertragung der Drehbewegung von der Kurbelwelle zur Nockenwelle. Des Weiteren können mittels der Zahnkette auch Nebenaggregate von Verbrennungsmotoren angetrieben sein. Dies kann beispielsweise die Lichtmaschine, eine Pumpe für die Servolenkung oder ein Klimaanlagenkompressor sein.

Die Zahnketten in modernen Verbrennungsmotoren sind hochbeanspruchte Bauelemente, die im Betrieb des Motors hohen Kräften ausgesetzt sind. So muss z.B. bei sich verändernden Temperaturen, aber auch bei häufigen Drehzahländerungen eine stets einwandfreie Funktion gewährleistet sein. Zudem wird bei modernen Motoren zunehmend auf Gewichtsreduktion und Leichtlauf geachtet, so dass ein ständiges Bestreben besteht, die Zahnketten im Hinblick auf ihre Funktion, Laufeigenschaften und Lebensdauer zu optimieren.

Eine gattungsbildende Zahnkette ist aus dem Dokument US 4,906,224 bekannt. Dabei ist die Zahnkette abwechselnd aus Außenkettengliedern und Innenkettengliedern aufgebaut. Das Außenkettenglied ist durch zwei Führungslaschen, eine Mittellasche und zwei Bolzen gebildet. Als Innenkettenglied dienen zwei Zahnlaschen. Die Mittellasche ist auf den Bolzen aufgepresst. Die Zahnlaschen weisen die doppelte Dicke der Führungs- bzw. Mittellaschen auf. Als Dicke ist dabei die Breite der Zahnlaschen, quer zum Verlauf der Zahnkette zu verstehen.

Eine weitere Gestaltungsmöglichkeit für Zahnketten ist aus der DE 203 04 437 U1 bekannt. Die Außenkettenglieder dieser Zahnkette sind durch zwei Außenlaschen gebildet, die durch jeweils zwei Bolzen miteinander verbunden sind. Als Innenkettenglied dient eine einzelne Innenlasche, die jedoch im Vergleich zu den Außenlaschen deutlich breiter als diese ausgeführt ist. Insbesondere ist die Innenlasche breiter als beide Außenlaschen zusammengenommen.

Auch sind Hülsenketten bekannt, die eine Hülse aufweisen, welche zumindest durch die Innenlaschen verläuft. Diese Gestaltung führt jedoch zu einer auffälligen Akustik, weshalb derartige Ketten im Automobilbau nur eine geringe Verbreitung gefunden haben. Auch ist es bekannt, Hülsenzahnketten einzusetzen, wobei durch die als Zahnlaschen gebildeten Innenlaschen ebenfalls eine Hülse verläuft. Diese komplexe Gestaltung führt jedoch zu einem hohen Fertigungsaufwand und damit hohen Fertigungskosten, weshalb aufgrund des intensiven Kostendrucks in der Automobilbranche versucht wird, den Einsatz solcher Ketten zu vermeiden.

Es ist deshalb Aufgabe der Erfindung, eine Zahnkette bereitzustellen, die hinsichtlich der bekannten Ausführungsformen von Zahnketten verbesserte Eigenschaften aufweist. Insbesondere soll der Verschleiß der Kette reduziert und die Dauerfestigkeit erhöht werden, wobei gleichzeitig eine kostengünstige Ausführung angestrebt wird.

Bei einer gattungsgemäßen Zahnkette kann deshalb die Innenlasche jeweils eine Laschendicke d und eine Stegbreite b aufweisen und ein Verhältnis von Laschendicke d zu Stegbreite b größer als 1,6 betragen. Die Laschendicke d wird dabei am Laschenrücken quer zur Längsachse der Zahnkette gemessen. Die Stegbreite b wird gemessen zwischen einer Bolzenöffnung der Innenlasche und einer in Kraftrichtung hierzu beabstandeten Zahnflanke, wobei die Breite als geringster Abstand gemessen von der Zahnflanke rechtwinklig zur Bolzenöffnung definiert ist. Mit dem gewählten Verhältnis zwischen Laschendicke d zu Stegbreite b ergibt sich eine vorteilhafte Gestaltung der Zahnkette hinsichtlich der aufnehmbaren Kräfte und auftretenden Reibungen im Kettengelenk. So wird durch die "breite" Gestaltung der Innenlasche ein sogenannter Hülseneffekt erzielt. Obwohl also die Zahnkette keine Hülse aufweist, wird durch die Gestaltung der Zahnkette und der damit vorliegenden Bolzenöffnung ein Reibungsverhalten zwischen Innenlaschen und Bolzen erzielt, wie dies bisher sonst nur zwischen Hülsen und Bolzen möglich war. Die Laschendicke ins Verhältnis zur Stegbreite zu setzen ist deshalb vorteilhaft, da bei einer erhöhten Laschendicke auch größere Kräfte auf die einzelne Innenlasche wirken, welche durch das Material rings um die Bolzenöffnung aufgenommen werden müssen. Hier hat sich die Stegbreite als bester Indikator für die möglichen aufzunehmenden Kräfte herausgestellt. Zudem ist eine derartige Gestaltung vorteilhaft, da die Anzahl der Scherstellen auf dem Bolzen reduziert werden. Werden anstatt einer breiten Innenlasche eine Vielzahl schmaler Innenlaschen (als sogenanntes Laschenpaket) genutzt, so weist jede dieser Innenlaschen produktionsbedingte Toleranzen auf. Dies führt dazu, dass sich die Kontaktkräfte zwischen einer einzelnen Innenlasche und dem damit jeweils in Kontakt stehenden Bolzenbereich bei jeder Innenlasche unterscheiden. Der Bolzen wird damit entlang seiner Länge unterschiedlich belastet, was zu Problemen bei Verschleiß und Dauerfestigkeit führen kann.

Zur Berechnung eines Verhältnisses zweier Größen, wird die erste Größe durch die zweite Größe dividiert. Um das Verhältnis zwischen Laschendicke d und Stegbreite b zu bestimmen wird demnach die Laschendicke d durch die Stegbreite b dividiert (d.h. es gilt d/b).

Alternativ kann für die Zahnkette auch ein Verhältnis von Laschendicke zu Stegbreite größer als 1,7 oder in einer weiteren Ausführungsform größer als 1,75 gewählt sein. Hierdurch wird eine weitere vorteilhafte Gestaltung der Zahnkette ermöglicht. Verglichen zur Zahnkette mit einem Verhältnis von 1,6 bedeutet die Ausführung der Zahnkette mit einem Verhältnis von 1,7 oder 1,75, dass die Stegbreite b relativ zur Laschendicke d verkleinert ist. Insbesondere bei Motoren, in denen keine bzw. nur geringe Lastspitzen auf die Zahnkette übertragen werden, wird es somit ermöglicht, eine optimale Zahnlaschengestaltung für die Zahnkette zu nutzen. Die Stegbreite b kann also materialoptimiert gestaltet werden, ohne die Dauerfestigkeit der Zahnkette negativ zu beeinflussen.

Alternativ kann vorgesehen werden, dass das Verhältnis von Laschendicke d zu Stegbreite b kleiner oder gleich 3 ist. Es hat sich gezeigt, dass eine beliebige Vergrößerung des Verhältnisses von Laschendicke d zu Stegbreite b zu keiner weiteren Verbesserung der Eigenschaften der Zahnkette führt. So steht z.B. zu befürchten, dass bei sehr breiten Innenlaschen, d.h. bei Verhältnissen von Laschendicke zu Stegbreite größer 3 die notwendige Schmierung zwischen Innenlasche und Bolzen nicht mehr sicher zu gewährleisten sein kann.

Weiter kann vorgesehen werden, dass ein Verhältnis der Gesamtdicke aller Laschen des Innenkettenglieds zur Gesamtdicke aller Laschen des Außenkettenglieds größer als 1,13 beträgt. Hierdurch ergibt sich eine optimierte Kraftübertragung bzw. Krafteinleitung auf die Bolzen. Zudem hat sich gezeigt, dass trotz der größeren Gesamtdicke aller Laschen des Innenkettenglieds im Vergleich zur Gesamtdicke aller Laschen des Außenkettenglieds dies nicht zu einer Überlastung des Außenkettenglieds führt.

Weiter kann vorgesehen sein, dass eine Symmetrieachse, welche längs der Zahnkette verläuft, durch mindestens eine Mittellasche hindurch oder zwischen mindestens zwei in Kontakt stehenden Mittellaschen verläuft. Die Zahnkette ist also derart aufgebaut, dass in ihrem Inneren, d.h. im Bereich des Verlaufs der Symmetrieachse immer eine Mittellasche bzw. mehrere Mittellaschen verlaufen und an diese jeweils zu beiden Seiten anschließend eine Innenlasche positioniert ist. Dies führt zu einer optimalen Krafteinleitung auf den Bolzen und sichert die Dauerfestigkeit der Zahnkette.

Gemäß einer weiteren Ausführungsform kann vorgesehen sein, dass die Dicke der einen Mittellasche oder die Gesamtdicke der Mittellaschen kleiner ist als die Laschendicke d einer Innenlasche. Mit dieser Gestaltung kann die Dicke eines Kettenrades, in welche die Zahnkette eingreift, gering gehalten werden. Die Mittellasche muss nicht notwendigerweise als Zahnlasche gebildet sein, so dass diese lediglich der Kraftübertragung entlang der Kette dient, jedoch nicht mit dem Kettenrad selbst in Kontakt treten muss. Die dünnere Gestaltung der Mittellasche bringt deshalb keine Nachteile mit sich.

Alternativ kann vorgesehen sein, dass die mindestens eine Mittellasche als Zahnlasche ausgeführt ist. Dies führt zu einem verbesserten Eingriffsverhalten der Zahnkette in ein zugehöriges Kettenrad. Die zwischen Kettenrad und Zahnkette auftretenden Kräfte werden auf eine größere Kontaktfläche übertragen, was sich vorteilhaft auf die Gesamtlebensdauer von Zahnkette und Kettenrad auswirkt.

Gemäß einer weiteren Ausführungsform kann vorgesehen sein, dass die mindestens eine Mittellasche auf die Bolzen aufgeschoben ist. Die Mittellasche steht demnach mit dem Bolzen in Kontakt, ist jedoch nicht z.B. aufgepresst oder auf sonstige Weise unlösbar mit dem Bolzen verbunden. Dies stellt ein einfaches Herstellungsverfahren sicher und vermeidet unnötige Kosten.

Weiter kann die Zahnkette derart gestaltet sein, dass die Außenlaschen als Führungslaschen gebildet sind. Die Außenlaschen weisen demnach keine Zahnform auf, sondern überdecken den von den Zähnen einer Zahnlasche gebildeten Zwischenraum. Während also ein Zahn eines Kettenrads in die Zahnlasche eingreift, wird der jeweilige Zahn seitlich von der Außenlasche überdeckt, so dass ein seitliches Verrutschen der Kette auf dem Kettenrad verhindert ist. Die als Führungslasche gebildete Außenlasche könnte also demnach eine ovale Form aufweisen.

Weiter umfasst die erfindungsgemäße Lösung der Aufgabe auch eine Innenlasche für eine Zahnkette für eine der vorangegangenen Ausführungsformen.

Im Folgenden werden die Ausführungsformen anhand der Zeichnungen näher beschrieben. Es zeigen:
- Fig. 1: eine schematische Darstellung einer erfindungsgemäßen Zahnkette mit Blick auf die Oberseite der Innenlaschen,
- Fig. 2: eine Ansicht einer erfindungsgemäßen Innenlasche von der Seite,
- Fig. 3: eine schematische Darstellung einer erfindungsgemäßen Innenlasche von oben und
- Fig. 4: eine schematische Ansicht einer Zahnkette mit einer als Führungslasche ausgebildeten Außenlasche.

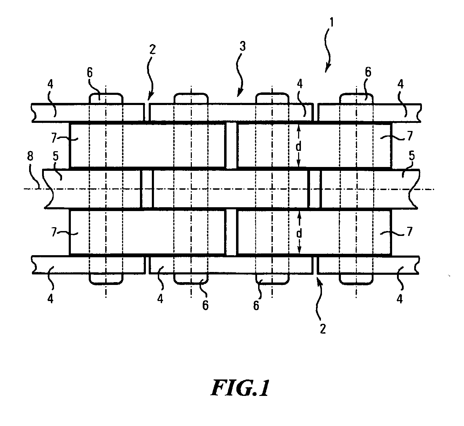

Fig. 1 zeigt einen Abschnitt einer erfindungsgemäßen Zahnkette 1. Die Zahnkette 1 ist aufgebaut aus einer Vielzahl von sich entlang der Zahnkette abwechselnden Innenkettengliedern 2 und Außenkettengliedern 3. Die Außenkettenglieder 3 umfassen mindestens zwei Außenlaschen 4, mindestens eine Mittellasche 5 und zwei Bolzen 6. Die Innenkettenglieder umfassen mindestens zwei als Zahnlaschen geformte Innenlaschen 7.

Die Bolzen 6 erstrecken sich quer zu einer Symmetrieachse bzw. Längsachse 8 der Zahnkette 1. Auf zwei benachbart angeordneten Bolzen 6, die jeweils dem gleichen Außenkettenglied 3 angehören, ist im Wesentlichen in der Mitte der Bolzen 6 eine einzelne Mittellasche 5 positioniert. Die Mittellasche 5 ist auf die Bolzen 6 aufgeschoben, wobei sich die Bolzen 6 durch zwei Bolzenöffnungen der Mittellasche 5 erstrecken. Des Weiteren sind auf jeweils jeden Bolzen 6 eines Außenkettenglieds 3 zwei Innenlaschen 7 anschließend und in Kontakt stehend zur Mittellasche 5 aufgeschoben. Die Innenlaschen 7 weisen ebenfalls Bolzenöffnungen auf, durch die sich der Bolzen hindurcherstrecken kann. Die Innenlaschen 7 erstrecken sich entlang der Zahnkette 1 in Richtung eines benachbarten Außenkettenglieds 3 und sind mit diesem über jeweils einen Bolzen 6 verbunden. Demnach erstreckt sich also ein Bolzen 6 eines ersten Außenkettenglieds 3 durch eine erste Bolzenöffnung 15 der Innenlasche 7 und ein zweiter Bolzen 6 eines zweiten Außenkettenglieds 3 durch eine zweite Bolzenöffnung 15 der Innenlasche 7. Im Anschluss an die Innenlaschen 7 sind auf den Bolzen 6 jeweils Außenlaschen 4 positioniert, durch welche sich die Bolzen 6 ebenfalls hindurcherstrecken. Die Außenlaschen 4 können auf die Bolzen aufgepresst bzw. mit diesen vernietet sein. Die Zahnkette 1 ist also zur Längsachse 8 symmetrisch aufgebaut.

Es ist erfindungsgemäß möglich eine einzelne Mittellasche 5 oder auch eine Mehrzahl von miteinander in Kontakt stehenden Mittellaschen 5 als sogenanntes Laschenpaket einzusetzen. Bei einer Zahnkette mit einer einzigen Mittellasche 5 oder bei einer ungeraden Anzahl mehrerer Mittellaschen 5 verläuft die Längsachse 8 durch die Mittellasche 5 oder eine der Mittellaschen 5 hindurch. Werden zwei oder eine gerade Anzahl von Mittellaschen 5 verbaut, so verläuft die Längsache 8 zwischen zwei in Kontakt stehenden Mittellaschen 5.

Die Innenlaschen 7 weisen eine Laschendicke d auf, welche sich von den Dicken der Außenlaschen 4 sowie der Mittellaschen 5 unterscheidet. Dabei ist die Laschendicke d der Innenlaschen 7 größer gewählt als die jeweiligen Dicken der verbleibenden Laschen, d.h. der Laschen der Außenkettenglieder 3. Insbesondere ist die Dicke einer Mittellasche 5 oder die addierte Gesamtdicke mehrerer miteinander in Kontakt stehender Mittellaschen 5 geringer als die Laschendicke d einer einzelnen Innenlasche 7. Zudem ist das Verhältnis der addierten Gesamtdicke aller Laschen des Innenkettenglieds 2 zur addierten Gesamtdicke aller Laschen des Außenkettenglieds 3 größer als 1,13. Die einzelne Mittellasche 5 oder die Mehrzahl der Mittellaschen 5 können als Zahnlaschen ausgeführt sein.

Das Außenkettenglied 3 ist dadurch gekennzeichnet, dass zwischen den Laschen und den Bolzen 6 keinerlei Relativbewegung erfolgt. Eine Verschwenkung erfolgt lediglich zwischen dem Innenkettenglied 3 und dem Außenkettenglied 2. Folglich verschwenken die Innenlaschen 7 um die Bolzen 6. Die Kettengelenke, welche die Beweglichkeit der Zahnkette sicherstellen sind demnach von den Innenlaschen 7 und den Bolzen 6 gebildet. Die breite Gestaltung der Innenlaschen 7 vergrößert die Gelenkfläche, d.h. die Kontaktfläche zwischen einer Innenlasche 7 und einem Bolzen 6. Es ergibt sich damit eine größere Gelenkfläche als bei bisher bekannten hülsenlosen Zahnketten. Zudem sorgt die breite Gestaltung der Innenlaschen 7 für eine gleichmäßige, d.h. gratfreie Gelenkfläche. Dies konnte bisher beim Einsatz von mehreren dünnen Innenlaschen als Laschenpaket auf Grund der vorhandenen Fertigungstoleranzen nicht erreicht werden.

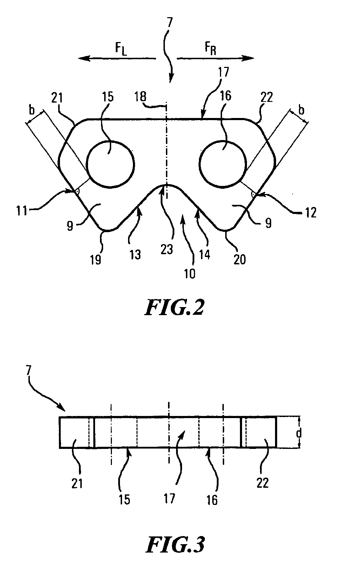

Fig. 2 zeigt eine einzelne Innenlasche 7 in Seitenansicht. Die Innenlasche 7 ist als Zahnlasche mit zwei Zähnen 9 ausgestaltet, zwischen denen sich eine Kettenzahnaufnahme 10 befindet. In die Kettenzahnaufnahme kann ein Zahn eines Kettenrades eingreifen. Die Innenlasche 7 weist zwei Außenflanken 11, 12 auf, welche mit jeweils einer Flanke eines Kettenradzahnes in Kontakt kommen können. Des Weiteren weist die Innenlasche 7 zwei Innenflanken 13,14 auf. Die Innenflanken 13,14 können mit den Flanken eines Kettenradzahnes in Kontakt stehen. Des Weiteren weist die Innenlasche 7 zwei Bolzenöffnungen 15,16 auf, durch welche sich im zusammengebauten Zustand der Zahnkette 1 jeweils ein Bolzen 6 erstreckt. Von einer Oberseite 17 der Innenlasche 7 zur Kettenzahnaufnahme 10 verläuft eine Symmetrielinie 18, zu der die Innenlasche 7 spiegelsymmetrisch ist. Während eines Betriebs der Zahnkette werden die Innenlaschen 7 mit den Kräften F_{R} und F_{L} belastet. Diese Kräfte werden aufgebracht durch die Zugkraft, welche entlang der Symmetrieachse auf die Zahnkette 1 wirkt. Die Kräfte F_{R} und F_{L} wirken deshalb entlang der Innenlasche 7 quer zur Symmetrielinie 18, d.h. von der Symmetrielinie 18 in Richtung der Bolzenöffnungen 15,16 sowie in Richtung der Außenflanken 11,12.

Aufgrund der Kräfte F_{R} und F_{L} ist demnach der Bereich zwischen den Bolzenöffnungen 15,16 und den Außenflanken 11,12 der mit am stärksten belastete Bereich der Innenlaschen 7. Die Belastbarkeit der Innenlaschen 7 wird also durch die Stegbreite b des Bereichs zwischen den Bolzenöffnungen 15,16 und den Außenflanken 11,12 mitbestimmt. Dabei bemisst sich die Stegbreite b als geringster Abstand zwischen den Außenflanken 11,12 und den Bolzenöffnungen 15,16. Die Messung der Stegbreite b erfolgt dabei im 90°-Winkel zu den Außenflanken 11,12. Die Außenflanken 11,12 müssen nicht notwendigerweise geradlinig gestaltet sein, sondern können auch einen geringfügigen Radius aufweisen. Ebenso müssen die Bolzenöffnungen 15,16 nicht notwendigerweise zylindrisch gestaltet sein, sondern können z.B. auch eine ovale oder elliptische Kontur aufweisen.

Die Außenflanken 11,12 werden begrenzt durch die Flankenübergänge 19,20, welche als abgerundete Zahnspitzen geformt sind. Die Flankenübergänge 19,20 bilden die Grenze und den Übergang zwischen der Außenflanke 11 und der Innenflanke 13 sowie zwischen der Außenflanke 12 und der Innenflanke 14. Des Weiteren werden die Außenflanken 11,12 von Übergangsbereichen 21,22 begrenzt. Die Außenflanke 11 geht mittels des abgerundet gestalteten Übergangsbereichs 21 in die Oberseite oder den Rückenbereich 17 über. Ebenso geht die Außenflanke 12 mittels des Übergangsbereichs 22 in die Oberseite 17 über. Die Oberseite 17 verläuft geradlinig zwischen den Übergangsbereichen 21,22. Des Weiteren weist die Innenlasche 7 einen abgerundeten Innenflankenbereich 23 auf, welcher den Übergang von der Innenflanke 13 auf die Innenflanke 14 bildet.

Fig. 3 (nicht maßstabsgetreu) zeigt die Oberseite 17 einer Innenlasche 7. Die Innenlasche 7 weist eine Laschendicke d auf, welche quer zur Symmetrieachse 8 der Zahnkette 1 gemessen ist. Zu beiden Seiten der Oberseite 17 schließen sich der Übergangsbereich 21 und der Übergangsbereich 22 an.

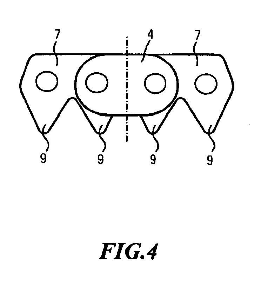

Fig. 4 zeigt eine Seitenansicht der Zahnkette 1, wobei die Bolzen 6 jedoch nicht gezeigt sind. Die Zahnkette 1 wird seitlich von einer Außenlasche 4 abgeschlossen. Die Außenlasche 4 hat im gezeigten Ausführungsbeispiel eine ovale Form. Die Außenlasche 4 überdeckt deshalb einen Zwischenbereich zwischen zwei Innenlaschen 7. Sofern die Mittellasche 5 als Zahnlasche ausgebildet ist, so wird der Bereich der Kettenzahnaufnahme 10 der Mittellasche 5 von der Außenlasche 4 seitlich überdeckt.

Eine Herstellung der Innenlaschen 7 kann mittels Feinstanzen oder Nachschneiden erfolgen. Der Glattschnittanteil in den Bolzenöffnungen ist größer oder gleich 90 % der Laschendicke d. Der Glattschnittanteil an den Innenflanken beträgt mindestens 80% der Laschendicke d.

## Patentansprüche

1. Zahnkette (1) mit abwechselnd aufeinander folgenden Innenkettengliedern (2) und Außenkettengliedern (3), wobei die Außenkettenglieder (3) mindestens zwei Außenlaschen (4), mindestens eine Mittellasche (5) und zwei Bolzen (6) umfassen, die Innenkettenglieder (2) mindestens zwei als Zahnlaschen geformte Innenlaschen (7) umfassen, welche zwei Außenflanken (11,12) und zwei Bolzenöffnungen (15,16) aufweisen, und die mindestens eine Mittellasche (5) zwischen den Innenlaschen (7) positioniert ist, **dadurch gekennzeichnet, dass** die Innenlaschen (7) jeweils eine Laschendicke d und eine Stegbreite b aufweisen, wobei die Stegbreite b als geringster Abstand zwischen einer Außenflanke (11,12) und der nächstgelegenen Bolzenöffnung (15,16) definiert ist und ein Verhältnis von Laschendicke d zu Stegbreite b größer als 1,6 beträgt.

2. Zahnkette (1) nach Anspruch 1, **dadurch gekennzeichnet, dass** das Verhältnis von Laschendicke d zu Stegbreite b größer als 1,7, besonders bevorzugt größer als 1,75 ist.

3. Zahnkette (1) nach einem der Ansprüche 1 oder 2, **dadurch gekennzeichnet, dass** das Verhältnis von Laschendicke d zu Stegbreite b kleiner oder gleich 3 ist.

4. Zahnkette (1) nach einem der vorhergehenden Ansprüche, **dadurch gekennzeichnet, dass** ein Verhältnis der Gesamtdicke aller Laschen des Innenkettenglieds (2) zur Gesamtdicke aller Laschen des Außenkettenglieds (3) größer als 1,13 beträgt.

5. Zahnkette (1) nach einem der vorhergehenden Ansprüche, **dadurch gekennzeichnet, dass** eine Symmetrieachse (8), welche längs der Zahnkette (1) verläuft, durch mindestens eine Mittellasche (5) hindurch oder zwischen mindestens zwei in Kontakt stehenden Mittellaschen (5) verläuft.

6. Zahnkette (1) nach einem der vorhergehenden Ansprüche, **dadurch gekennzeichnet, dass** die Dicke der einen Mittellasche (5) oder die Gesamtdicke der Mittellaschen (5) kleiner ist als die Laschendicke d einer Innenlasche (7).

7. Zahnkette (1) nach einem der vorhergehenden Ansprüche, **dadurch gekennzeichnet, dass** die mindestens eine Mittellasche (5) als Zahnlasche ausgeführt ist.

8. Zahnkette (1) nach einem der vorhergehenden Ansprüche, **dadurch gekennzeichnet, dass** die mindestens eine Mittellasche (5) auf die Bolzen (6) aufgeschoben ist.

9. Zahnkette (1) nach einem der vorhergehenden Ansprüche, **dadurch gekennzeichnet, dass** die Außenlaschen (4) als Führungslaschen gestaltet sind.

10. Innenlasche (7) für eine Zahnkette (1), wobei die Innenlasche (7) zwei Außenflanken (11,12) und zwei Bolzenöffnungen (15,16) aufweist, **dadurch gekennzeichnet, dass** die Innenlasche (7) jeweils eine Laschendicke d und eine Stegbreite b aufweist, wobei die Stegbreite b als geringster Abstand zwischen einer Außenflanke (11,12) und der nächstgelegenen Bolzenöffnung (15,16) definiert ist und ein Verhältnis von Laschendicke d zu Stegbreite b größer als 1,6 beträgt.

## Claims

1. A toothed chain (1) with inner chain links (2) and outer chain links (3) alternately succeeding one another, wherein the outer chain links (3) comprise at least two outer plates (4), at least one central plate (5) and two pins (6), the inner chain links (2) comprise at least two inner plates (7) formed as tooth plates, which have two outer flanks (11,12) and two pin openings (15,16), and the at least one central plate (5) is positioned between the inner plates (7), **characterised in that** each of the inner plates (7) has a plate thickness d and a land width b, wherein the land width b is defined as the smallest distance between an outer flank (11,12) and the nearest pin opening (15,16), and a ratio of plate thickness d to land width b is greater than 1.6.

2. A toothed chain (1) according to Claim 1, **characterised in that** the ratio of plate thickness d to land width b is greater than 1.7, particularly preferably greater than 1.75.

3. A toothed chain (1) according to Claim 1 or 2, **characterised in that** the ratio of plate thickness d to land width b is smaller than or equal to 3.

4. A toothed chain (1) according to any one of the preceding Claims, **characterised in that** a ratio of the total thickness of all plates of the inner chain link (2) to the total thickness of all plates of the outer chain link (3) is greater than 1.13.

5. A toothed chain (1) according to any one of the preceding Claims, **characterised in that** an axis of symmetry (8), which extends along the toothed chain (1), extends through at least one central plate (5) or between at least two central plates (5) which are in mutual contact.

6. A toothed chain (1) according to any one of the preceding Claims, **characterised in that** the thickness of the one central plate (5) or the total thickness of the central plates (5) is smaller than the plate thickness d of an inner plate (7).

7. A toothed chain (1) according to any one of the preceding Claims, **characterised in that** the at least one central plate (5) is in the form of a tooth plate.

8. A toothed chain (1) according to any one of the preceding Claims, **characterised in that** the at least one central plate (5) is slid on to the pins (6).

9. A toothed chain (1) according to any one of the preceding Claims, **characterised in that** the outer plates (4) are formed as guide plates.

10. An inner plate (7) for a toothed chain (1), wherein the inner plate (7) has two outer flanks (11,12) and two pin openings (15,16), **characterised in that** each inner plate (7) has a plate thickness d and a land width b, wherein the land width b is defined as the smallest distance between an outer flank (11,12) and the nearest pin opening (15,16), and a ratio of plate thickness d to land width b is greater than 1.6.

## Revendications

1. Chaîne dentée (1) à maillons de chaîne internes (2) et maillons de chaîne externes (3) successifs alternés, dans laquelle les maillons de chaîne externes (3) comportent au moins deux plaques externes (4), au moins une plaque médiane (5) et deux axes (6), les maillons de chaîne internes (2) comportent au moins deux plaques internes (7) conformées comme des plaques dentées, qui présentent deux flancs externes (11, 12) et deux orifices d'axe (15, 16), et ladite au moins une plaque médiane (5) est positionnée entre les plaques internes (7), **caractérisée en ce que** les plaques internes (7) présentent chacune une épaisseur de plaque d et une largeur d'âme b, moyennant quoi la largeur d'âme b est définie comme étant la distance la plus faible entre un flanc externe (11, 12) et l'orifice d'axe (15, 16) le plus proche, et le rapport entre l'épaisseur de plaque d et la largeur d'âme b est supérieur à 1,6.

2. Chaîne dentée (1) selon la revendication 1, **caractérisée en ce que** le rapport entre l'épaisseur de plaque d et la largeur d'âme b est supérieur à 1,7, et de préférence encore supérieur à 1,75.

3. Chaîne dentée (1) selon l'une des revendications 1 ou 2, **caractérisée en ce que** le rapport entre l'épaisseur de plaque d et la largeur d'âme b est inférieur ou égal à 3.

4. Chaîne dentée (1) selon l'une quelconque des revendications qui précèdent, **caractérisée en ce qu'**un rapport entre l'épaisseur totale de toutes les plaques du maillon de chaîne interne (2) et l'épaisseur totale de toutes les plaques du maillon de chaîne externe (3) est supérieur à 1,13.

5. Chaîne dentée (1) selon l'une quelconque des revendications qui précèdent, **caractérisée en ce qu'**un axe de symétrie (8) qui s'étend le long de la chaîne dentée (1) traverse au moins une plaque médiane (5) ou passe entre au moins deux plaques médianes (5) qui sont en contact.

6. Chaîne dentée (1) selon l'une quelconque des revendications qui précèdent, **caractérisée en ce que** l'épaisseur de ladite une plaque médiane (5) ou l'épaisseur totale desdites plaques médianes (5) est inférieure à l'épaisseur de plaque d d'une plaque interne (7).

7. Chaîne dentée (1) selon l'une quelconque des revendications qui précèdent, **caractérisée en ce que** ladite au moins une plaque médiane (5) est conformée comme une plaque dentée.

8. Chaîne dentée (1) selon l'une quelconque des revendications qui précèdent, **caractérisée en ce que** ladite au moins une plaque médiane (5) est glissée sur les axes (6).

9. Chaîne dentée (1) selon l'une quelconque des revendications qui précèdent, **caractérisée en ce que** les plaques externes (4) sont constituées comme des plaques de guidage.

10. Plaque interne (7) pour une chaîne dentée (1), dans laquelle la plaque interne (7) comporte deux flancs externes (11, 12) et deux orifices d'axe (15, 16), **caractérisée en ce que** chaque plaque interne (7) présente une épaisseur de plaque d et une largeur d'âme b, moyennant quoi la largeur d'âme b est définie comme étant la distance la plus faible entre un flanc externe ( 11, 12) et l'orifice d'axe (15, 16) le plus proche, et le rapport entre l'épaisseur de plaque d et la largeur d'âme b est supérieur à 1,6.
